# EUROPEAN PATENT APPLICATION

(11) **EP 3 438 833 A1**
(43) Date of publication of application: **06.02.2019**
(21) Application number: 16896732.1
(22) Date of filing: 28.03.2016
(51) Int. Cl.: G06F 13/00, G06F 3/0481

(54) **COMMUNICATION DEVICE, COMMUNICATION METHOD AND COMMUNICATION PROGRAM**

(71) Applicant: Socionext Inc., Yokohama-shi Kanagawa 222-0033 (JP)
(72) Inventor: MUKAI, Shinya, yokohama-shi Kanagawa 222-0033 (JP)
(74) Representative: Haseltine Lake LLP
(86) International application number: PCT/JP2016/059908
(87) International publication number: WO 2017/168512

(57) **Abstract**

A communication device includes a communication client initiating communication via a network, a communication server responding to the communication initiation, and a memory storing profile information having ID and address of a first virtual terminal. The communication server sends, in response to a first command from a first device, the profile information of the communication device to the first device, and sets, in response to a second command from the first device, address of a second virtual terminal in the second command to link information of the first virtual terminal in the profile information, and the communication client establishes communication connection via the network from the first virtual terminal to the second virtual terminal on the basis of the address of the second virtual terminal set to the link information of the first virtual terminal in response to a predetermined event correlated with the first virtual terminal.

## Description

### TECHNICAL FIELD

The present invention relates to a communication device, a communication method, and a communication program.

### BACKGROUND ART

Devices, for example, a video device and a display device that displays a video, are connected via a dedicated connection cable. When a video play button is operated after content is selected in a video device, a play control signal is transmitted from the video device via a connection cable and the content is played on a display device. In this manner, when a plurality of devices are connected together and are operated, the devices are generally connected by dedicated connectors and cables.

On the other hand, a technique of connecting a plurality of consumer electronics such as home networks by a communication network and operating the consumer electronics has been proposed in recent years. For example, Patent Literature 1 below discloses a technique of controlling communication between devices. Moreover, Patent Literature 2 discloses a network terminal.

### CITATION LIST

### PATENT LITERATURE

Patent Literature 1: Japanese Patent Application Publication No. 2014-10608
Patent Literature 2: Japanese Patent Application Publication No. 2003-67267

### SUMMARY OF INVENTION

### PROBLEMS TO BE SOLVED BY THE INVENTION

However, there are various pending problems that network communication standards of respective devices are different and dedicated server devices for performing network management and communication processing between devices are needed. Due to this, only experts who have a certain level of specialized knowledge can connect various types of devices using a network to operate the devices but it is difficult for general users to do the same easily.

Therefore, an object of a first aspect of the present disclosure is to provide a communication device, a communication method, and a communication program capable of connecting a plurality of devices via a network easily and establishing inter-terminal communication.

### MEANS FOR SOLVING THE PROBLEMS

A first aspect of the present disclosure is a communication device comprising: a communication client unit that initiates communication via a network; a communication server unit that responds to initiation of the communication; and a memory that stores profile information of the communication device having identification information and address of a first virtual terminal, wherein the communication server unit sends, in response to a first command transmitted from a first device via the network, the profile information of the communication device to the first device, and sets, in response to a second command transmitted from the first device via the network, address of a second virtual terminal included in the second command to link information of the first virtual terminal in the profile information of the communication device, and the communication client unit establishes communication connection via the network from the first virtual terminal to the second virtual terminal on the basis of the address of the second virtual terminal set to the link information of the first virtual terminal in response to a predetermined event correlated with the first virtual terminal.

### ADVANTAGEOUS EFFECTS OF THE INVENTION

According to the first aspect, a plurality of devices are connected via a network easily so that terminals of the devices are communicated each other.

### BRIEF DESCRIPTION OF DRAWINGS

Figs. 1 and 2 are diagrams illustrating processes performed until first and second devices become being able to communicate each other according to the present embodiment.
Fig. 3 is a diagram illustrating processes in which the first and second devices perform communication according to the present embodiment.
Figs. 4, 5, and 6 are diagrams illustrating the configuration and a program group of devices that perform inter-terminal communication such as a first device, a second device, and the like.
Fig. 7 is a diagram illustrating a configuration of a device such as a terminal device and a program group.
Fig. 8 is a diagram illustrating a processing content of a WEB application and a description thereof.
Fig. 9 is a diagram illustrating communication between a terminal device and first and second devices and programs and hardware for processing communication.
Fig. 10 is a diagram illustrating a process in which a terminal device acquires and executes the WEB application 111.
Fig. 11 is a diagram illustrating a process of a profile command (PROF command) by a terminal device.
Fig. 12 is a diagram illustrating a process of a link command (LINK command) by a terminal device.
Fig. 13 is a diagram illustrating a communication process of a SEND command between terminals of the first and second devices being in a linked state.
Fig. 14 is a diagram illustrating a communication process of a SEND command in a specific example.
Fig. 15 is a diagram illustrating a communication process of the RECV command between terminals of the first and second devices being in the linked state.
Fig. 16 is a diagram illustrating a communication process of the RECV command in a specific example.
Fig. 17 is a diagram illustrating a configuration of profile data.
Fig. 18 is a diagram illustrating an example of information on data that can be processed by a terminal, which is attribute information of a terminal.
Fig. 19 is a diagram illustrating an example of profile data of the first device in a specific example.
Fig. 20 is a diagram illustrating an example of profile data of the second device in a specific example.
Fig. 21 is a diagram illustrating a second embodiment.

### DESCRIPTION OF EMBODIMENTS

### [Connection process between first and second devices in present embodiment]

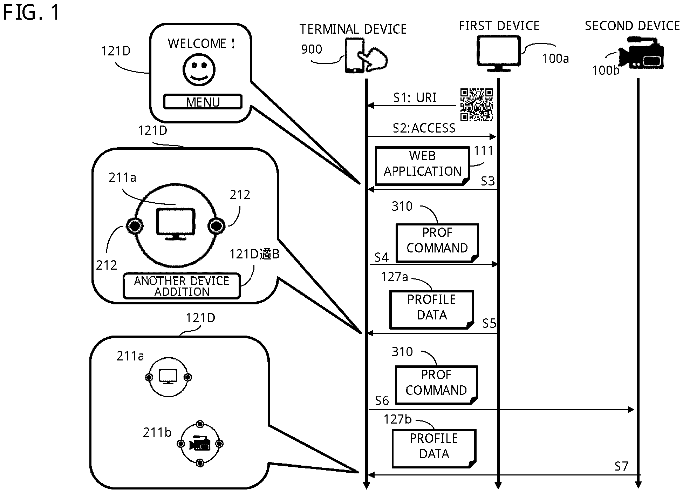

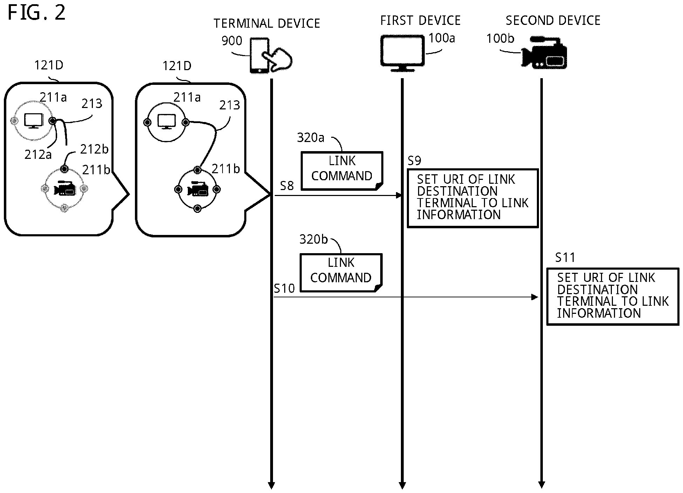

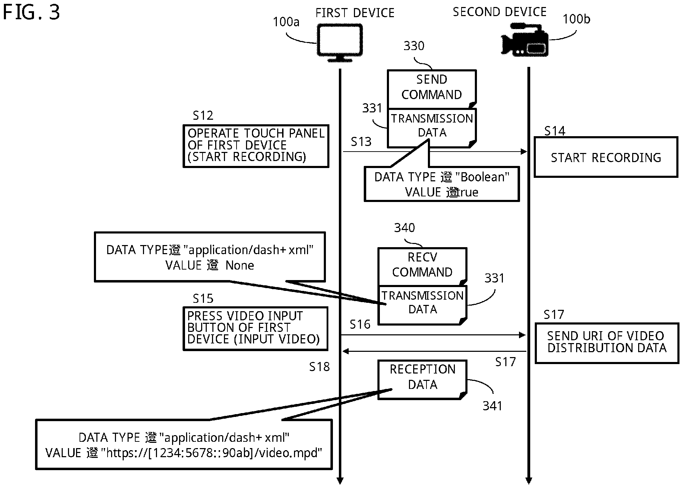

Figs. 1 and 2 are diagrams illustrating processes performed until first and second devices become being able to communicate each other according to the present embodiment. Fig. 3 is a diagram illustrating processes in which the first and second devices perform communication according to the present embodiment. Hereinafter, examples of the processes performed until a first device 100a and a second device 100b become being able to be connected to each other by a terminal device 900 and a communication process performed between virtual terminals of the first and second devices after that will be described.

In the present embodiment, the first device 100a is a display device with a touch panel, for example, and the second device 100b is a video camera device, for example. The display device has physical operation elements such as various operation buttons and operation target images (character strings and icons) displayed on a display screen, a connection terminal to which a physical cable is connected, and the like. Moreover, the video camera device also has physical operation elements which are various operation buttons (a record button, a play button, a stop button, and the like), a connection terminal to which a physical cable is connected, and the like. Virtual terminals are set to the first and second devices 100a and 100b so as to correspond to the operation elements and connection terminals. Specifically, the virtual terminal is defined in the profile information of each of the first and second devices, and the virtual terminal of the first device and the virtual terminal of the second device perform communication via a communication network. Therefore, the virtual terminal is not a physical terminal but a virtual communication terminal (a communication node) set in the profile information. Moreover, the virtual terminal may be correlated with the physical operation element or the physical connection terminal and may be further correlated with a virtual function other than the operation element or the connection terminal.

In the present embodiment, such a virtual terminal will be referred to simply as a terminal. However, the terminal will be referred to as a virtual terminal when the terminal is distinguished from a physical terminal particularly.

In Fig. 1, the terminal device 900 is a smartphone, a pad terminal device (a tablet), a personal computer, and the like, for example. A WEB browser (a communication client) can operate on the terminal device 900, and the terminal device can connect to a node on a communication network via a communication network such as the Internet or an intranet. Moreover, the first device 100a and the second device 100b are the display device, the video camera device, and the like, and an OS (Operating System) which is a basic program, a communication client (program), a communication server (program), and the like are installed in the devices. The communication client and the communication server are programs that perform transmission processes according to HTTP (Hypertext Transfer Protocol), for example.

As illustrated in Fig. 1, first, a user acquires URI (Uniform Resource Identifier) information of the first device using the terminal device 900 (S1). Although the URI is acquired by a matrix-type barcode in the example of Fig. 1, the same can be acquired by other methods. The terminal device 900 accesses the acquired URI using the communication client of the WEB browser (S2), and the first device 100a sends a WEB application (program) 111 stored in an internal storage device in response to the access from the terminal device using the communication server of the first and second devices (S3). As a result, the browser of the terminal device 900 executes the downloaded WEB application and displays a display image 121D of the WEB application on a display device. The WEB application is HTML5 data, for example.

When a user performs an operation of selecting the item of connection GUI (a process of the WEB application) (GUI: Graphical User Interface) from the menu in the display image 121D, the connection GUI is executed and the terminal device 900 sends a profile command (hereinafter PROF command) 310 to an arbitrary terminal of the first device 100a (S4). The WEB application 111 is an application of the first device and thus has destination information of the PROF command.

In the first device, the communication server sends profile data 127a stored in the internal storage device in response to the PROF command (S5). The profile data has information on the plurality of virtual terminals included in the first device, for example, a terminal name (ID information), a URI, link information, and the like, in addition to the device name, device icon information, and a URI of the first device. Specific examples thereof will be described later.

As a result, the connection GUI of the terminal device 900 displays an image of the connection GUI having an icon 211a of the first device 100a and an another device addition request icon 121D-B in the display image 121D on the basis of the acquired profile data. The icon 211a includes an icon of the virtual terminal 212.

Subsequently, when a device addition request icon is operated and the URI of the second device is input or acquired, the connection GUI of the terminal device transmits a PROF command 310 to an arbitrary terminal of the second device 100b (S6). In response to this, the communication server of the second device sends profile data 127b stored therein (S7). As a result, the connection GUI of the terminal device 900 additionally displays an icon 211b of the second device 100b in the display image 121D on the basis of the acquired profile data. This icon includes the icon of a virtual terminal.

Even when the device addition request icon is not displayed, a user may touch on a margin area of the display image 121D to input or acquire the URI of the second device so that the connection GUI of a terminal device transmits the PROF command 310 to the second device. Alternatively, the second device may be selected from a bookmark instead of the device addition request icon. Furthermore, the WEB application that performs the process of the connection GUI may be stored in either the first device or the second device.

Referring to Fig. 2, a user performs a drag operation so that arbitrary terminals 212 of the icons of the first and second devices displayed on the display screen 121D of the terminal device 900 are connected. For example, when a connection operation is initiated from the terminal 212a of the icon 211a of the first device, a terminal 212b that can communicate with the terminal 212a of the first device among the terminals of the icon 211b of the second device is highlighted. Since the profile data includes information on data that can be processed by terminals and an upper limit of the number of connections as terminal information, the connection GUI can detect the terminal 212b that can communicate with the terminal 212a on the basis of the terminal information. Moreover, the profile data may include the name and the description of each terminal and the name and the description may be displayed on the display screen. In this case, a user can easily determine from which terminal the drag operation is to start.

When a user drag between the terminal 212a and the terminal 212b, the connection GUI of the terminal device transmits a link command (hereinafter LINK command) 320a to the terminal 212a of the first device and transmits a LINK command 320b to the terminal 212b of the second device (S8 and S10). The LINK command 320a transmitted to the first device includes a connection instruction and the URI of the terminal 212b of the second device. On the other hand, the LINK command 320b transmitted to the second device includes a connection instruction and the URI of the terminal 212a of the first device. As a result, the communication server of the first device 100a sets the URI of the link destination terminal 212b to the link information of the terminal 212a in the profile data (S9). Similarly, the communication server of the second device 100b sets the URI of the link destination terminal 212a to the link information of the terminal 212b in the profile data (S10). The URIs of these link destination terminals are set by a LINK command process (program) to be described later. The connection GUI of the terminal device displays a first device connection icon 213.

When the URIs of the mutual link destination terminals are set to the link information of the profile data, a state in which the terminal 212a of the first device and the terminal 212b of the second device are in a linked state and can communicate with each other is created. A specific communication process will be described later.

Referring to Fig. 3, a communication process between the first and second devices will be described. As described above, when the link destination terminal for the LINK command is set, a state in which the terminal 212a of the first device and the terminal 212b of the second device are in a linked state and can communicate with each other is created. Therefore, a communication client of a device in which a predetermined event occurred is activated in response to occurrence of the event correlated with the terminals 212a and 212b. The predetermined event includes an operation on a physical operation element by a user, activation of power, and the like, for example. The activated communication client transmits, to the URI of the link destination terminal set to the profile data, a command and data for a process, such as data transmission and data request, of a terminal correlated with the predetermined event. Furthermore, the communication server of the device of the link destination terminal executes a process corresponding to the received command and data.

Such communication between terminals will be referred to as inter-terminal communication. The inter-terminal communication is HTTP communication between a communication client and a communication server. Therefore, the communication client and the communication server can communicate according to HTTP as long as the information on the URI of a terminal correlated with the predetermined event and the information on the URI of a terminal being linked to the terminal are known.

The processes S12 to S14 in Fig. 3 are an example in which the second device 100b starts recording when a user touches on a touch panel of the display screen of the first device 100a. First, when a user performs an operation of touching on an arbitrary position or a predetermined position of the touch panel of the first device (S12), an OS of the first device activates a communication client and the communication client transmits a send command (hereinafter a SEND command) 330 and transmission data 331 from the terminal 212a correlated with the touch panel to the terminal 212b of the second device 100b (S13). The transmission data 331 includes a data type "Boolean" and a value "true", and the value "true" means a record start instruction. The SEND command and the transmission data are transmitted to all terminals of other devices set as a link destination terminal of the terminal 212a in the profile data of the first device.

The communication server of the second device 100b activates a program for processing the received SEND command to starts a record operation correlated with a record terminal which is the terminal 212b and the value "true" of the transmission data (S14).

The processes S15 to S18 in Fig. 3 are an example in which the second device sends the URI of video distribution data when a video input button of the first device is operated. When a user operates a video input button of the first device (S15), a player control program for controlling the display device is activated. The player control program executes a communication client using parameters including the URI of the video distribution terminal of the second device set as the link destination terminal of the video input terminal in the profile data of the first device, a receive command (hereinafter a RECV command), and transmission data. As a result, the communication client transmits a RECV command 340 and transmission data 331 to the video distribution terminal of the second device (S16).

Furthermore, the communication server of the second device activates a program for processing the received RECV command to execute a process corresponding to the video input terminal which is the terminal 212b and "application/dash+xml" (a MIME type indicating the video distribution data) which is a data type of transmission data. As a result, the communication server sends reception data 341 of which the value is the URI "https://[1234:5678::90ab]/video.mpd" of the above video distribution data acquired by the program for processing the RECV command to the video input terminal of the first device (S17). The communication client of the first device acquires video content on the basis of the URI of the video distribution data to cause the display device to play the content (S18).

The predetermined event of the first device may be activation of power of the first device instead of operation on the video input button.

Although the connection GUI is executed by the terminal device 900 in the above-described example, instead of this, the first device or the second device may execute a connection GUI of WEB application of the terminal device 900 to transmit the PROF command and the LINK command and perform the corresponding process.

Hereinafter, the configuration of the respective devices and terminal device that enable the operations of Figs. 1, 2, and 3 and a program group thereof will be described, and the operations of the respective commands will be described in detail.

### [Configuration of first and second devices, and terminal device and program group]

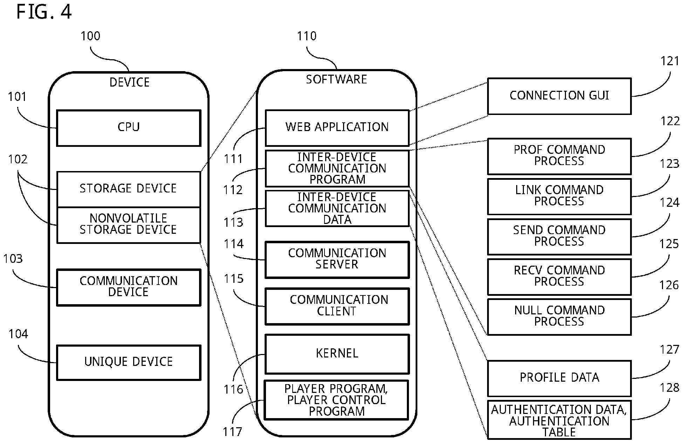

Figs. 4, 5, and 6 are diagrams illustrating the configuration and a program group of devices that perform inter-terminal communication such as a first device, a second device, and the like.

As illustrated in Fig. 4, a device 100 includes a CPU (Central Processing Unit) 101 which is a central processing device, a storage device 102 including a nonvolatile storage device, and a communication device 103 for performing communication. Furthermore, in addition to these components, the device 100 includes a unique device 104 needed for functions unique to the device (for example, displaying, recording, playing, and the like). The unique functions include a process of initiating communication between a terminal correlated with a predetermined event and a link destination terminal thereof in response to the predetermined event. Furthermore, software 110 is stored or incorporated in the storage device 102.

The software 110 has a plurality of programs and data. A communication server (program) 114 is a program for performing reception and responding processes according to a communication standard called HTTP (Hypertext Transfer Protocol) (including a secure communication standard called HTTPS) and is generally called a HTTP server. A communication client (program) 115 is a program for performing a transmission process to a communication server according to HTTP and is generally called a HTTP client. A kernel 116 is an operating system and is a set of programs needed for basic operations of a device. Moreover, a player program and a player control program 117 for controlling the player program control the unique device 104.

The WEB application 111 is a program that the communication server 114 sends to a terminal device or the like that has accessed (via HTTP communication) the device 100 and is data of the program executed by the terminal device or the like. The WEB application includes a connection GUI (a program function) 121 to be described later.

An inter-device communication program 112 controls inter-device communication performed by the above-described types of commands and includes command processes (programs) 122 to 126 for processing these commands. A group of command process is activated mainly by a communication server of the device 100 and performs respective command processes. The group of command process includes a PROF command process 122, a LINK command process 123, a SEND command process 124, a RECV command process 125, and a NULL command process 126.

The inter-device communication data 113 is data referred to or set by inter-device communication. The inter-device communication data 113 mainly includes profile data 127 that describes unique information of the device 100 (including a device name, icon information, position information (positioning information or the like of a device based on GPS (Global Positioning System)), and information on a plurality of virtual terminals, for example, a terminal name, a terminal URI, and link information). Moreover, when authentication is needed in the inter-device communication, the inter-device communication data 113 may include authentication data 128.

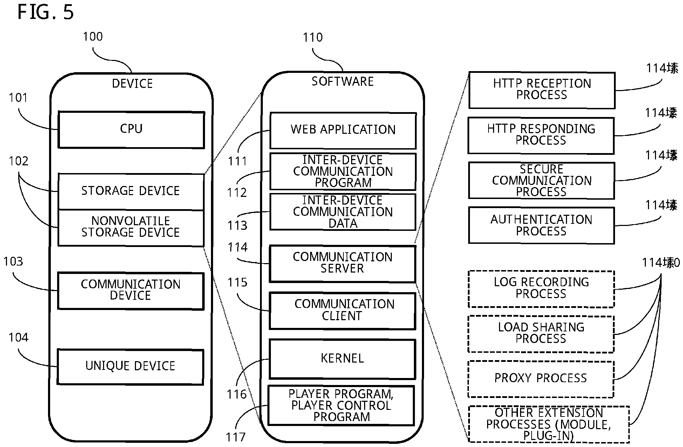

As illustrated in Fig. 5, the communication server 114 of the device 100 is a program having at least a HTTP reception process 114-1 that performs a reception process according to HTTP and a HTTP responding process 114-2 of sending the result of the reception process according to HTTP Moreover, the program may include, as needed, a secure communication process 114-3 for performing secure communication (HTTPS) and a reception authentication process 114-4 of processing authentication and authorization. In addition to this, the program may have a process 114-10 needed for the device. The process 114-10 is a log recording process, a load sharing process, a proxy process, and other extension processes, and the like.

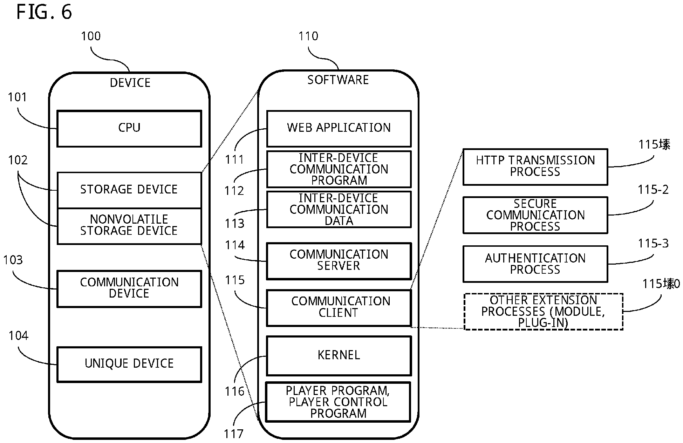

As illustrated in Fig. 6, the communication client 115 is a program having at least a HTTP transmission process 115-1 of performing a transmission process according to HTTP Moreover, the program may include, as needed, a secure communication process 115-2 for performing secure communication (HTTPS) and a transmission authentication process 115-3 of processing data transmission needed for authentication. In addition to this, the program may include a process 115-10 needed for the device.

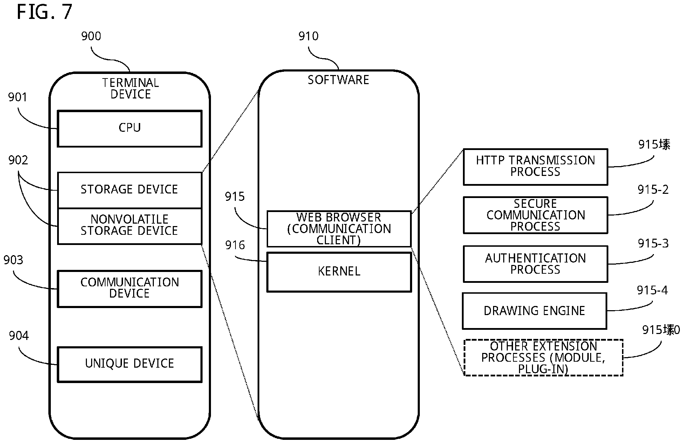

Fig. 7 is a diagram illustrating a configuration of a device such as a terminal device and a program group. The terminal device is a device such as a PC, a pad terminal device (a tablet), and a smartphone having a WEB browser. The terminal device 900 includes a CPU 901, a storage device 902 including a nonvolatile storage device, and a communication device 903 for performing communication. In addition to this, the terminal device 900 may include a unique device 904 needed for the functions unique to the device. Terminal software 910 is stored or incorporated in the storage device 902.

The terminal device software 910 has a plurality of programs and data. The WEB browser 915 is a communication client that performs a transmission process to a communication server according to HTTP. A kernel 916 is an operating system.

The WEB browser 915 is a program having at least a HTTP transmission process 915-1 of performing a transmission process according to HTTP and a drawing engine 915-4 that executes a responding process. Moreover, the program may include, as needed, a secure communication process 915-2 for performing secure communication and an authentication process 915-3 of processing data communication needed for authentication. In addition to this, the program may include a process 915-10 needed for the device.

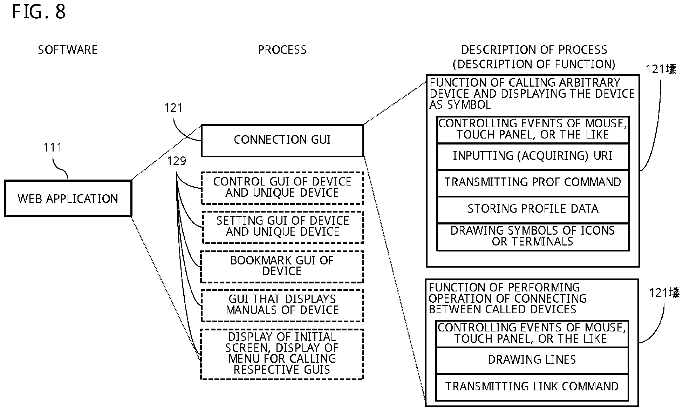

Fig. 8 is a diagram illustrating a processing content of a WEB application and a description thereof. The WEB application 111 includes the connection GUI (process) 121. In addition to this, the WEB application 111 may include the other process 129 as needed (a control GUI of a device and a unique device, a setting GUI of a device and a unique device, a bookmark GUI of a device, a GUI that displays manuals of a device, a display of an initial screen, a display of MENU for calling respective GUIs, and the like).

A function 121-1 of the connection GUI 121, of calling an arbitrary device and displaying the device as a symbol (an icon) has functions of controlling events of a mouse, a touch panel, or the like, inputting (acquiring) a URI, transmitting a PROF command, storing profile data, and drawing symbols of icons or terminals.

Moreover, a function 121-2 of the connection GUI 121, of performing an operation of connecting between called devices has functions of controlling events of a mouse, a touch panel, or the like, drawing lines, and transmitting a LINK command.

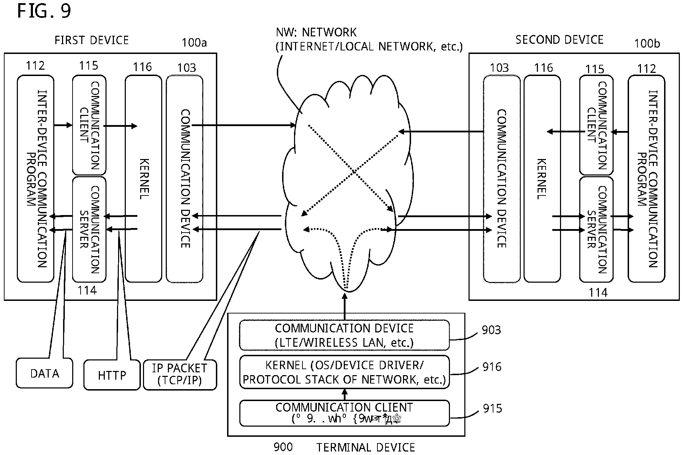

Fig. 9 is a diagram illustrating communication between a terminal device and first and second devices and programs and hardware for processing communication. First, a process in which the terminal device 900 accesses the first device 100a to acquire a WEB application and transmits a PROF command and a LINK command will be described.

The browser 915 of the terminal device 900 accesses or transmits commands from the communication device 903 to the first device 100a using a device driver of the kernel 916 or a protocol stack of a network on the basis of the above-described operation of the user. This communication is performed by HTTP-based access, transmission of an IP packet based on TCP/IP (Transmit Control Protocol/Internet Protocol), and physical communication by a communication device via a network NW to which a terminal device and the first device can connect.

In the first device 100a, the communication device 103 receives an IP packet and data in the IP packet is delivered to the communication server 114 by a protocol stack of the kernel. The communication server 114 sends a WEB application in response to the access or causes the inter-device communication program 112 to process commands and data in response to commands.

The command process of the inter-device communication program 112 executes a process corresponding to the command, and causes the communication server 114 to send profile data when the command is PROF command. When the command process is a LINK command, the command process of the inter-device communication program 112 set a link destination URI is set to terminal device information in the profile data.

Next, inter-device communication between the first and second devices will be described. When a predetermined event such as an operation on a physical operation element (a touch panel of a display screen or a video input button) or activation of power occurs in the first device 100a, a kernel or the other control program activates the communication client 115. The communication client transmits a command and transmission data corresponding to the predetermined event to a link destination URI of the virtual terminal correlated with the predetermined event according to HTTP. On the other hand, in the second device 100b, the communication server 114 receives the command and the transmission data and causes a command process corresponding to the inter-device communication program 112 to execute processing of the command.

### [Process of connection GUI of WEB application]

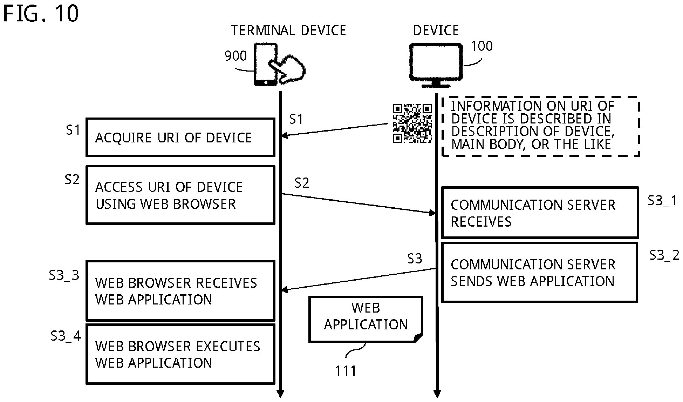

Fig. 10 is a diagram illustrating a process in which a terminal device acquires and executes the WEB application 111. A URI which is the location or address in a network of the device 100 is described in a description or a main body of the device. First, the terminal device 900 acquires the URI of the device 100 (S1), executes a communication client which is a WEB browser of the terminal device, and accesses the acquired URI (S2). The communication server 114 of the device 100 responds to this access (S3_1) and sends the WEB application 111 to the terminal device 900 (S3_2). The terminal device 900 receives the WEB application 111 (S3_3), and the WEB browser executes the WEB application (S3_4). The WEB application 111 is created by HTML5 (Hypertext Markup Language 5), for example. By executing the WEB application, various processes such as settings and operations of the device 100 can be easily operated on a graphical interface from a display screen of the terminal device 900.

The WEB application 111 has the connection GUI 121 which is one of various processing functions. The connection GUI 121 has a function of calling arbitrary devices and displaying the devices as symbols (icons) and a function for realizing an operation of connecting between called devices. As illustrated in Figs. 1 and 2, the device icon includes an icon of a logical terminal (a virtual terminal). The device and terminal icons may be two-dimensional and may be three-dimensional.

Data used for communication with terminals is called a command. An entity accessed by the terminal URI is a CGI (Common Gateway Interface). Upon being accessed, the terminal CGI executes a predetermined program. Therefore, when a command is transmitted to a terminal of a device, the inter-device communication program 112 of the device is executed and a command process corresponding to the type of the command is executed. As described above, the command type includes a profile PROF, a link LINK, a send SEND, a receive RECV, and a null NULL.

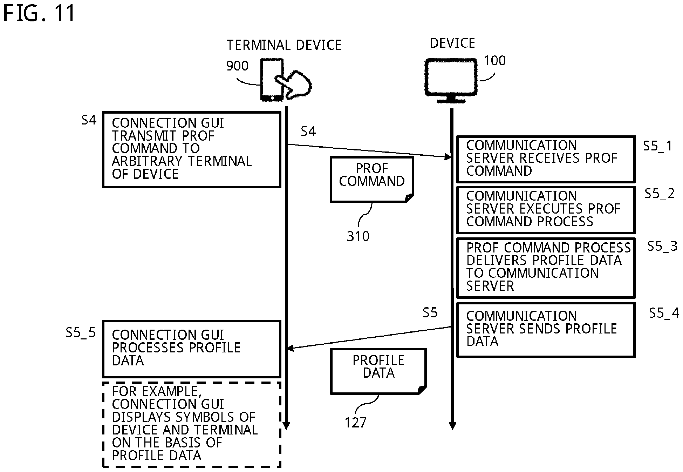

Fig. 11 is a diagram illustrating a process of a profile command (PROF command) by a terminal device. The PROF command is a command for requesting the device 100 to send profile data. The connection GUI 121 executed by the terminal device 900 transmits a PROF command 310 to an arbitrary terminal of the device 100 (S4). When the WEB application is acquired by the response from the device 100, the WEB application has information on a transmission destination URI of the PROF command of the device 100. Therefore, transmission of the PROF command to the device 100 by the connection GUI is automatically performed at the start of execution of the WEB application, for example. Alternatively, a user may input the URI of a desired device and issue a transmission instruction using a terminal device so that the connection GUI 121 transmits the PROF command to the device.

Upon receiving the PROF command (S5_1), the communication server 114 of the device 100 executes the PROF command process 122 (S5_2). The PROF command process 122 extracts the profile data 127 from a storage device in the device and delivers the profile data to the communication server (S5_3). The communication server sends the profile data 127 to the terminal device 900 (S5_4). The connection GUI of the terminal device processes the profile data and displays icons of the device and the terminal on the basis of the profile data, for example (S5_5). The icons are the same as those illustrated in Fig. 1.

The device 100 may check by a standard authentication function of a network, whether or not to receive and respond to the PROF command 310 in order to protect from malicious third-parties.

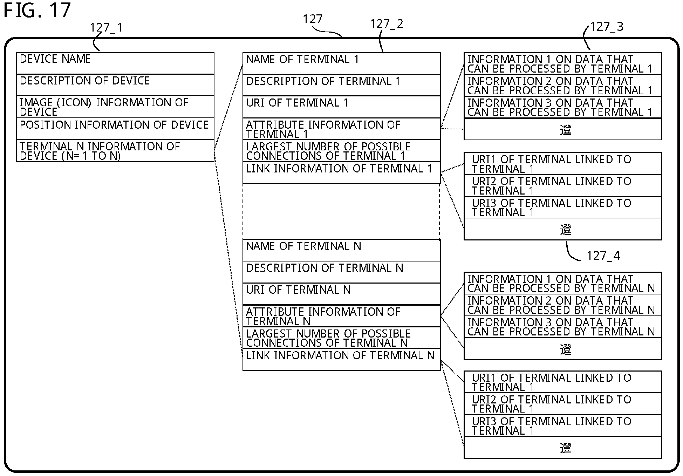

Fig. 17 is a diagram illustrating a configuration of profile data. The device 100 stores features and present states of the device and the terminals (virtual terminals) in the profile data 127. The profile data has data 127_1 related to the device and data 127_2 related to a plurality of terminals. The device data 127_1 has a device name, a description of a device, icon information of a device, position information of a device, and terminal information of a device. The terminal data 127_2 has a terminal name, a description of a terminal, a URI of a terminal, attribute information of a terminal, a largest number of possible connections of a terminal, and link information of a terminal.

The terminal attribute information 127_3 has a plurality of pieces of information on data that can be processed by the terminal. Moreover, the terminal link information 127_4 has a plurality of URIs of link destination terminals set by the LINK command transmitted to the terminal.

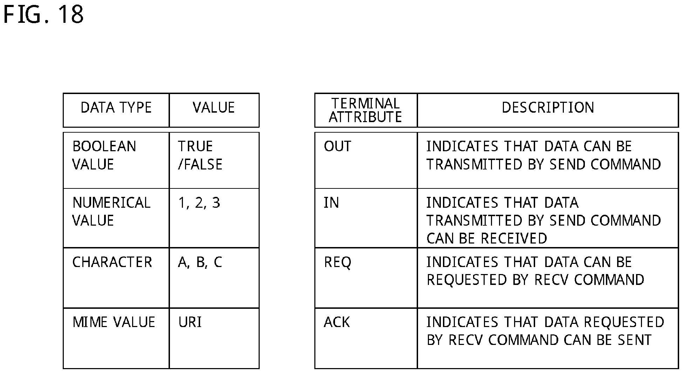

Fig. 18 is a diagram illustrating an example of information on data that can be processed by a terminal, which is attribute information of a terminal. The information on the data that can be processed by a terminal has the type (data type) of data that can be processed by the terminal and a terminal attribute indicating how the terminal process data. Transmission data and reception data are made up of a set of a data type and a value.

As illustrated in the drawing, the data type includes a Boolean (the value of which is true and false), a Number (the value of which is a number), a String (the value of which is a character line), and a MIME type (the value of which is a URI). Moreover, the terminal attribute is a combination of a SEND command, a RECV command, and transmission/reception directions thereof, namely, four types (IN, OUT, REQ, and ACK). The description of the terminal attributes is as illustrated in Fig. 18. Therefore, a link destination terminal of a terminal having the terminal attribute OUT is a terminal attribute IN, and a link destination terminal of a terminal having the terminal attribute IN is a terminal attribute OUT. Similarly, a link destination terminal of a terminal having the terminal attribute REQ is a terminal attribute ACK, and a link destination terminal of a terminal having the terminal attribute ACK is a terminal attribute REQ. On the basis of the terminal attribute and the data type, connection destination candidate terminals in the display image 121D described in Fig. 2 are highlighted.

When respective devices store profile data, an independent/distributed network is configured. In such network, even when a certain device in a network malfunctions, other devices can operate continuously without being influenced. Moreover, unlike a central server, communication with a device that accumulates information is not needed, and it is possible to realize inter-terminal communication of devices easily and at a low cost. Moreover, the privacy of device users can be ensured.

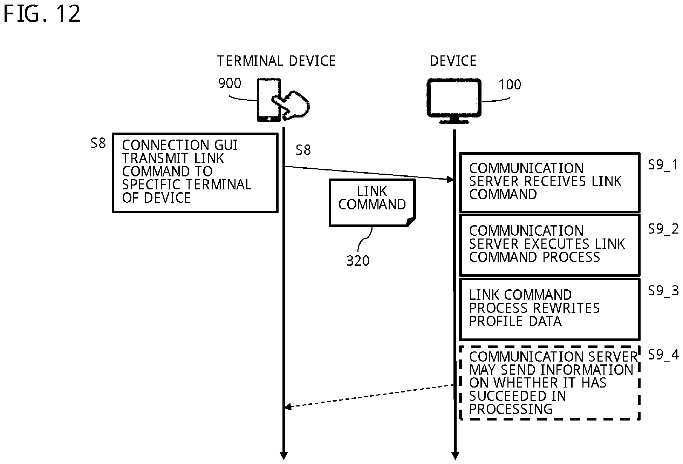

Fig. 12 is a diagram illustrating a process of a link command (LINK command) by a terminal device. In the present embodiment, link means a state in which different terminals are logically connected and can perform communication and an action of creating such a state. Different terminals may be terminals of different devices and may be different terminals in the same device. Moreover, one terminal may be linked to a plurality of different terminals. The LINK command is a command for linking or unlinking terminals.

As described in Fig. 2, when a user performs a drag operation so that different terminals are connected on a display screen of the connection GUI 121 of the terminal device 900, the LINK command 320 is transmitted to the URIs of the terminals dragged to be connected to the device 100 by the function 121-2 (Fig. 8) of the connection GUI, for an operation of connecting between terminals (S8). Although the LINK command is transmitted from the terminal device 900 to the device 100 only in Fig. 12, as described in Fig. 2, when different terminals that are to be in a linked state belong to different devices, the LINK command is transmitted to the URIs of the terminals of the respective devices. Transmission of the LINK command itself is performed by the communication client of the WEB browser.

The LINK command 320 includes information on whether terminals are to be linked or unlinked and information on the URI of a counterpart terminal of a link destination. In addition to this, the LINK command 320 may include authentication data 128.

Upon receiving the LINK command 320 (S9_1), the communication server 114 of the device 100 executes the LINK command process 123 (S9_2). The LINK command process 123 writes and sets the URI of the counterpart terminal included in the LINK command to the link information of the terminal of the transmission destination URI of the LINK command within the profile data 127 stored in the storage device 102 in the device 100. After that, the LINK command process 123 may send information indicating whether the communication server 114 has succeeded or failed in the process to the terminal device 900 (S9_4).

In this manner, when the URI of the link destination terminal is set to the link information in the profile data 127, different terminals are linked. When a predetermined event such as a user operating a physical operation element correlated with one terminal occurs, the communication client activated in response to the event transmits a SEND command, or a RECV command to be described later from the URI of a terminal correlated with the event to the URI of the link destination terminal. The type of a command and the transmission data appended to the command are correlated in advance with the terminal correlated with the event.

The device 100 may be restricted by a standard authentication function of a network, whether or not to receive and respond to the LINK command 320 in order to protect from malicious third-parties.

### [Inter-terminal communication process]

Next, the process of communication between terminals set in the linked state by a LINK command will be described. In inter-terminal communication, for example, a SEND command of performing data communication, a RECV command of requesting reception of data, and a NULL command used for responding or the like are transmitted. The NULL command is used, for example, when correct responding could not be performed due to a certain abnormality during communication or when it was not possible to accept the received command. When a NULL command is received, the device does not execute anything particularly.

### [SEND command]

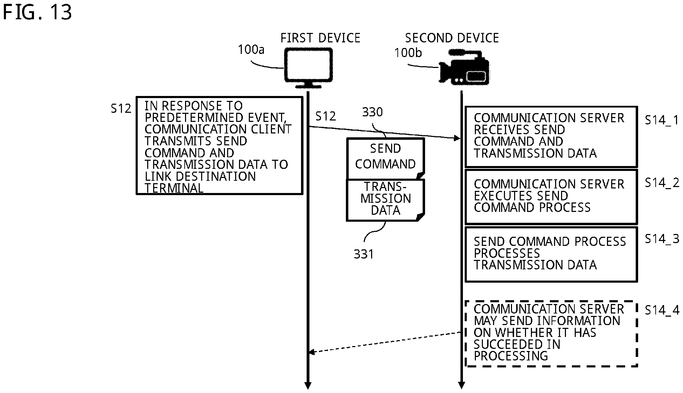

Fig. 13 is a diagram illustrating a communication process of a SEND command between terminals of the first and second devices being in a linked state. When a predetermined event corresponding to the terminal of the first device 100a occurs, the communication client 115 is activated. The communication client 115 transmits a SEND command 330 to the terminal of the second device 100b, that is a link destination of a terminal correlated with the predetermined event (S12). Transmission data 331 is transmitted by being appended to the SEND command 330. As illustrated in Fig. 3, the data type of the transmission data 331 is a Boolean and the value thereof is true or false. The SEND command and the transmission data are correlated with a terminal correlated with the predetermined event.

Upon receiving the SEND command 330 (S14_1), the communication server 114 of the second device 100b executes the SEND command process 124 (S14_2). The SEND command process 124 processes the transmission data 331 as input data input to the link destination terminal (S14_3). As a result, a process correlated with the link destination terminal of the second device and corresponding to the value of the transmission data is executed. After that, the SEND command process 124 may send information on whether the communication server 114 has succeeded or failed in rewriting to the first device 100a (S14_4).

The second device 100b may receive and process the SEND command 330 after performing authentication using the authentication data 128 obtained during linking in order to protect from the devices or the like of malicious third-parties.

The predetermined event corresponding to the terminal of the first device includes various events. For example, the predetermined event includes an event of a user operating the physical operation element of the first device, an event of activating the power of the first device, an event of a certain terminal of the first device receiving a SEND command from a terminal of another device, and an event of a sensor in the first device sensing a person.

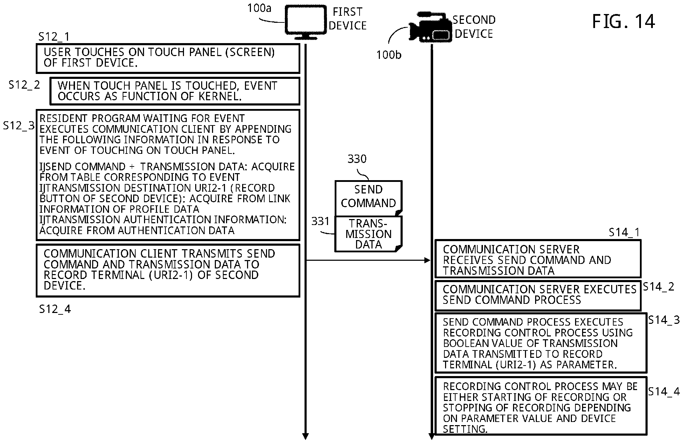

Fig. 14 is a diagram illustrating a communication process of a SEND command in a specific example. In a specific example, a communication client is activated in response to an operation on a touch panel of the first device, a SEND command is transmitted from a terminal correlated with the touch panel to a link destination terminal of the second device, and a communication server of the second device causes a SEND command process to execute a recording control process.

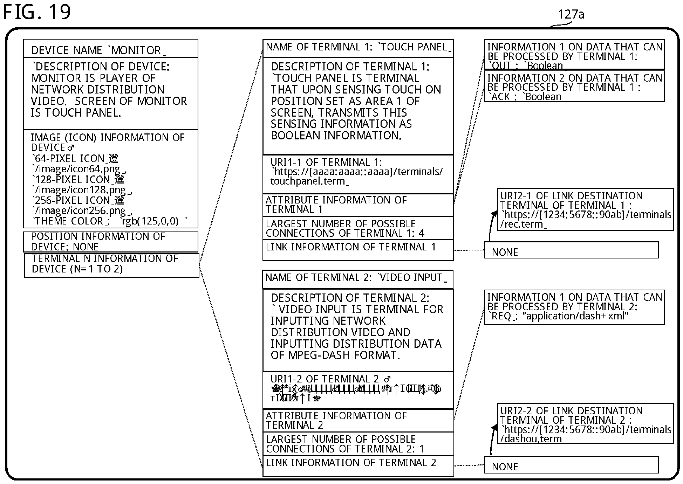

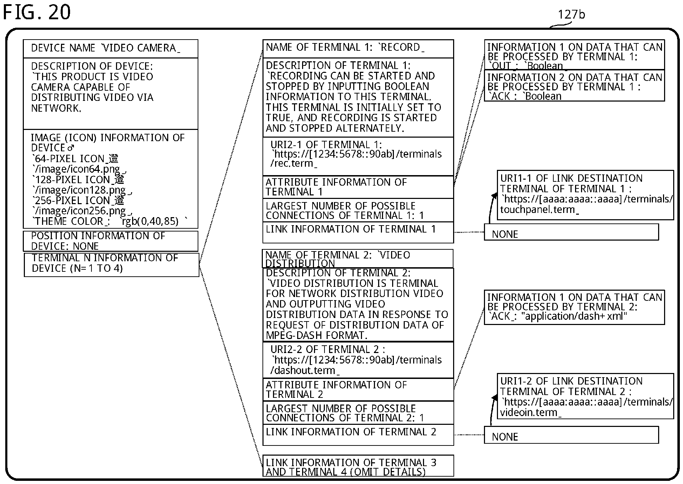

Fig. 19 is a diagram illustrating an example of profile data of the first device in a specific example. Fig. 20 is a diagram illustrating an example of profile data of the second device in a specific example.

The profile data 127a of the first device in Fig. 19 has a device name "Monitor", image information of the device, and terminal information of the device (the name of terminal 1 "Touch panel", URI1_1 of terminal 1, attribute information of terminal 1 ("OUT, Boolean" and "ACK, Boolean"), and link information of terminal 1 (set from "None" to "URI2_1 of link destination terminal")). Moreover, the profile data 127a has the terminal information (the name of terminal 2 "Video input", URI1_2 of terminal 2, attribute information of terminal 2 ("REQ, application/dash+xml"), and link information of terminal 2 (set from "None" to "URI2_2 of link destination terminal")).

The profile data 127b of the second device in Fig. 20 has a device name "Video camera", image information of the device, and terminal information of the terminal (the name of terminal 1 "Record", URI_2_1 of terminal 1, attribute information of terminal 1 ("IN, Boolean" and "ACK, Boolean"), and link information of terminal 1 (set from "None" to "URI1_1 of link destination terminal")). Moreover, the profile data 127b has the terminal information (the name of terminal 2 "Video distribution", URI2_2 of terminal 2, attribute information of terminal 2 ("ACK, application/dash+xml"), and link information of terminal 2 (set from "None" to "URI1_2 of link destination terminal")).

Therefore, terminal 1 of the first device "Touch panel" and terminal 2 of the second device "Record" are set to a linked state and can perform transmission (OUT) and reception (IN) of the SEND command, respectively. Moreover, terminal 2 of the first device "Video input" and terminal 2 of the second device "Video distribution" are set to a linked state and can perform transmission (REQ) and responding (ACK) of the RECV command, respectively.

In Fig. 14, a user touches on a touch panel of the first device (S12_1). When the user touches on the touch panel, an event occurs by a function of a kernel (S12_2). A resident program (daemon) waiting for an event acquires a SEND command and transmission data (Boolean, true) corresponding to the event, a transmission destination URI, and authentication information from a predetermined table or profile data in response to the event of touching on the touch panel and executes the communication client with these pieces of information (S12_3). The processes S12_1 to S12_3 are realized by the unique configuration of the first device.

The communication client of the first device transmits the SEND command 330 and the transmission data 331 from a terminal of the touch panel of the first device to URI2_1 of the terminal corresponding to a record terminal of the second device (S12_4).

On the other hand, the communication server of the second device receives the SEND command and the transmission data (S14_1) and executes a SEND command process (S14_2). The SEND command process executes a recording control process using as a parameter true/false value of the transmission data transmitted to the terminal (URI2_1) corresponding to the record terminal (S14_3). Specifically, the recording control process is either starting recording (true) or stopping recording (false) on the basis of a parameter value (true, false) and the setting of the profile data for the terminal of the second device. This process S14_3 is also realized by the unique configuration of the second device.

### [RECV command]

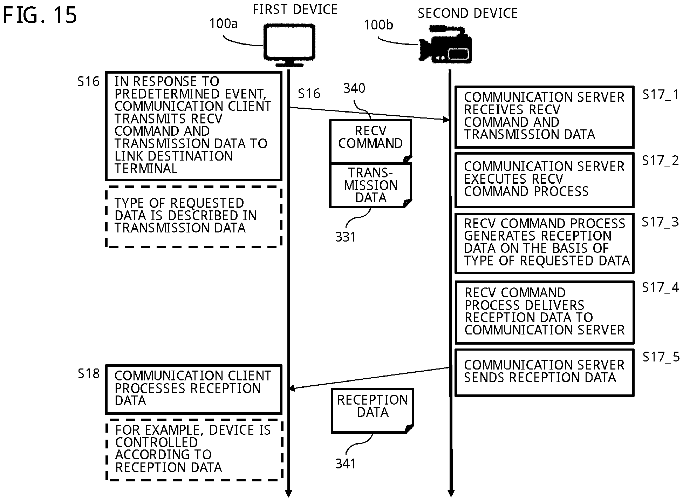

Fig. 15 is a diagram illustrating a communication process of the RECV command between terminals of the first and second devices being in the linked state. The communication client 115 is activated in response to a predetermined event in the first device 100a, and the communication client 115 transmits the RECV command 340 with the transmission data 331 to the terminal of the second device 100b which is a link destination of the terminal correlated with the predetermined event (S16). The transmission data 331 includes the type (data type) of requested data as illustrated in Fig. 3.

Upon receiving the RECV command 340 (S17_1), the communication server 114 of the second device 100b executes the RECV command process 125 (S17 2). The RECV command process 125 acquires the type (data type) of the data requested for the link destination terminal, generates reception data 341 corresponding to the type (S17_3), and delivers the reception data 341 to the communication server 114 (S17_4). Moreover, the communication server 114 sends the reception data to the first device 100a (S17_5).

The second device may receive and process the RECV command 340 when authentication was performed using the authentication data 128 in order to protect from the devices or the like of malicious third-parties.

The communication client of the first device having received the reception data processes the reception data 341 (S18). For example, the communication client controls the first device according to the reception data.

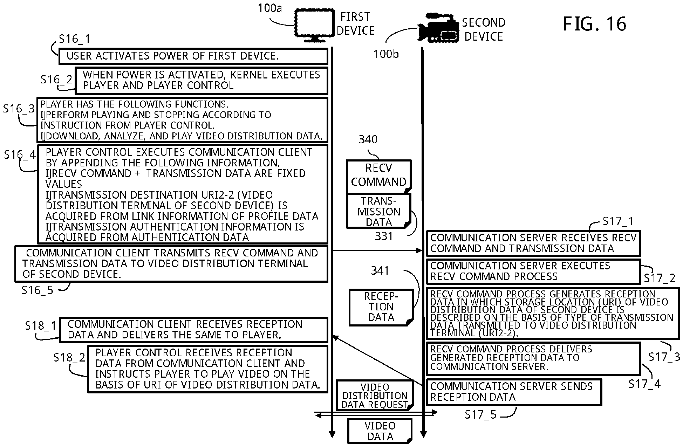

Fig. 16 is a diagram illustrating a communication process of the RECV command in a specific example. In a specific example, a communication client transmits a RECV command from a terminal correlated with a power activation event to a link destination terminal of the second device in response to the power activation event of the first device, and the RECV command process activated by the communication server of the second device sends the requested reception data to the terminal of the first device.

First, a user activates the power of the first device (S16_1). When the power is activated, a kernel executes a player (program) for controlling the first device and player control (program) for controlling the player (S16_2). The player has a function of performing playing or stopping playing according to an instruction from the player control and a function of downloading, analyzing, and playing video distribution data (S16_3). On the other hand, the activated player control acquires the RECV command and the transmission data (data type: application/dash+xml, value: null) corresponding to the video distribution terminal correlated with the power activation event, the URI (the video distribution terminal of the second device) of the link destination terminal of the terminal, and authentication information from a predetermined table and profile data. The player control activates the communication client using the acquired information as a parameter (S16_4). The RECV command and the transmission data are the unique value of the video input terminal correlated with power activation. The processes S16_1 to S16_4 are realized by a unique configuration of the first device.

The communication client transmits the RECV command 340 and the transmission data 331 to the URI of the video distribution terminal of the second device (S16_5).

On the other hand, the communication server of the second device receives the RECV command and the transmission data (S17_1). The communication server executes a RECV command process (S17 2). The RECV command process generates the reception data 341 including the URI of the storage location of the video distribution data of the second device as the reception data corresponding to the type of the transmission data transmitted to the video distribution terminal (URI2_2) (S17 3). This process S17 3 is realized by a unique configuration of the second device.

The RECV command process delivers the generated reception data to the communication server (S17_4). In response to this, the communication server sends the reception data 341 to the video input terminal of the first device (S17_5).

The communication client of the first device receives the reception data and delivers the same to the player control (S18_1). The player control instructs the player to perform playing with the URI of the video distribution data (S18_2). This process S18_2 is realized by a unique configuration of the first device.

After that, the player accesses the URI of the video distribution data to acquire and play the video content. In the example of Fig. 16, the URI of the video distribution data is the location of a storage area in which the video content is stored in the second device.

### [Second embodiment]

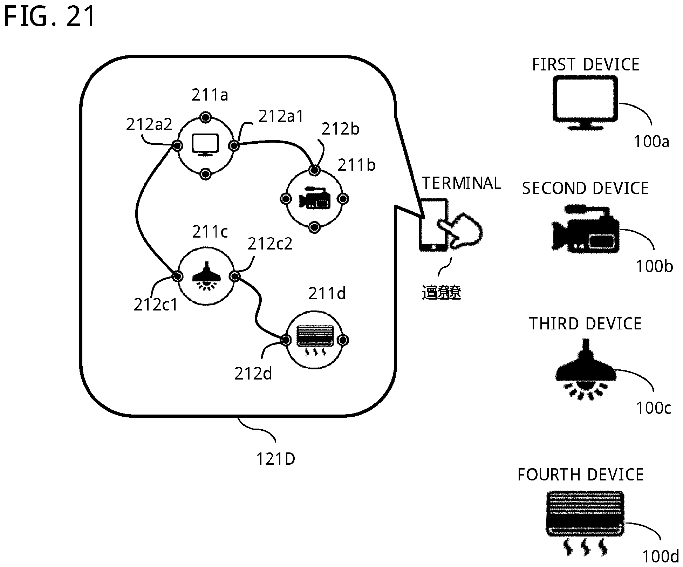

Fig. 21 is a diagram illustrating a second embodiment. In the embodiment of Fig. 21, a first device (a monitor device) 100a, a second device (a video camera) 100b, a third device (a lamp) 100c, and a fourth device (an air-conditioner) 100d are set in a linked state as illustrated in a display image 121D of a connection GUI of a terminal device 900. Such a linked state is realized when a user performs a drag operation so that the terminals of icons 211a to 211d of the respective devices are connected on a display screen 121D of the connection GUI, and in response to this, the connection GUI transmits a LINK command to the terminals of the respective devices and sets the URIs of the link destination terminals to the respective terminals.

The first device 100a is a monitor device, and as an example, is configured so that a menu for controlling the second to fourth devices is displayed on the monitor screen thereof. The respective menu items are correlated with the terminals of the first device 100a.

For example, in response to an event of touching on a first menu item on the monitor screen of the first device 100a, a SEND command or a RECV command is transmitted from a terminal 212a1 of the first device 100a to a terminal 212b of the second device 100b. Inter-terminal communication is the same as described above.

In response to an event of touching on a second menu item on the monitor screen of the first device 100a, the SEND command is transmitted from a terminal 212a2 of the first device to a terminal 212c1 of the third device 100c. The second menu item is start operation, for example. The SEND command process of the third device 100c executes a process of turning on the third device 100c corresponding to "true" indicting start operation of the transmission data of the SEND command.

The SEND command process of the third device 100c transmits the SEND command received by the terminal 212c1 from the terminal 212c_2 to a terminal 212d of the fourth device 100d. The SEND command process of the fourth device 100d starts air-conditioning. Such a transmission process is realized by a unique configuration of the third device 100c so that the player or the like of the third device 100c can be processed.

As illustrated in the second embodiment of Fig. 21, a plurality of products in a home or an office can be networked using communication control between virtual terminals of devices according to the present embodiment. As illustrated in Figs. 4, 5, and 6, the components needed for consumer electronics products are programs and data such as the communication server 114, the communication client 115, the inter-device communication program 112, and the inter-device communication data 113, and hardware such as the CPU 101, the storage device 102, and the communication device 103. The WEB application 111 does not need to be stored in a storage device inside the device but may be downloaded and installed from a predetermined WEB application distribution server to a terminal device.

As described above, according to the present embodiment, by the function of the connection GUI of the WEB application, a user can connect between virtual terminals of each device by a virtual connection cable (puts the virtual terminals into a linked state) to create a state in which inter-terminal communication can be performed by performing a drag operation of connecting between terminals of device icons on a screen of a terminal device or a certain device. Therefore, it is possible to connect a plurality of devices via a network without using a complex physical connection cable. This network connection does not need a large-scale device such as a central server device.

### INDUSTRIAL APPLICABILITY

A communication device, a communication method, and a communication program capable of establishing a state in which a plurality of devices can be connected via a network and performing inter-terminal communication of the plurality of devices are provided.

### REFERENCE SIGNS LIST

100a: First device
100b: Second device
212: Terminal, Virtual terminal
900: Terminal Device
111: WEB application
112: Inter-device communication program
113: Inter-device communication data
114: Communication server (program)
115: Communication client (program)
116: Kernel
117: Player (program), Player control (program)
127: Profile data

## Claims

1. A communication device comprising:
a communication client unit that initiates communication via a network;
a communication server unit that responds to initiation of the communication; and
a memory that stores profile information of the communication device having identification information and address of a first virtual terminal, wherein
the communication server unit sends, in response to a first command transmitted from a first device via the network, the profile information of the communication device to the first device, and sets, in response to a second command transmitted from the first device via the network, address of a second virtual terminal included in the second command to link information of the first virtual terminal in the profile information of the communication device, and
the communication client unit establishes communication connection via the network from the first virtual terminal to the second virtual terminal on the basis of the address of the second virtual terminal set to the link information of the first virtual terminal in response to a predetermined event correlated with the first virtual terminal.

2. The communication device according to claim 1, wherein
the communication client unit transmits a third command from the first virtual terminal to the second virtual terminal via the communication connection.

3. The communication device according to claim 1, wherein
the communication server unit executes a predetermined process corresponding to the first virtual terminal in response to a third command transmitted from the second virtual terminal to the first virtual terminal.

4. The communication device according to claim 3, wherein
the predetermined process corresponding to the first virtual terminal includes a process which also corresponds to transmission data appended to the third command.

5. The communication device according to claim 3, wherein
the predetermined process corresponding to the first virtual terminal includes a process of generating reception data corresponding to transmission data appended to the third command and sending the reception data to the second virtual terminal.

6. A non-transitory computer-readable storage medium storing therein a communication program for causing a processor of a communication device to execute a process comprising:
sending, in response to a first command transmitted from a first device via a network, profile information of the communication device having identification information and address of a first virtual terminal to the first device;
setting, in response to a second command transmitted from the first device via the network, address of a second virtual terminal included in the second command to link information of the first virtual terminal in the profile information of the communication device; and
establishing communication connection via the network from the first virtual terminal to the second virtual terminal on the basis of the address of the second virtual terminal set to the link information of the first virtual terminal in response to a predetermined event correlated with the first virtual terminal.

7. The non-transitory computer-readable storage medium storing therein the communication program according to claim 6,
the process further comprising:
transmitting a third command from the first virtual terminal to the second virtual terminal via the communication connection.

8. The non-transitory computer-readable storage medium storing therein the communication program according to claim 6,
the process further comprising:
executing a predetermined process corresponding to the first virtual terminal in response to a third command transmitted from the second virtual terminal to the first virtual terminal.

9. A communication method that is executed by a communication device, the communication method comprising:
sending, in response to a first command transmitted from a first device via a network, profile information of the communication device having identification information and address of a first virtual terminal to the first device;
setting, in response to a second command transmitted from the first device via the network, address of a second virtual terminal included in the second command to link information of the first virtual terminal in the profile information of the communication device; and
establishing communication connection via the network from the first virtual terminal to the second virtual terminal on the basis of the address of the second virtual terminal set to the link information of the first virtual terminal in response to a predetermined event correlated with the first virtual terminal.

10. The communication method according to claim 9,
the process further comprising:
transmitting a third command from the first virtual terminal to the second virtual terminal via the communication connection.

11. The communication method according to claim 9,
the process further comprising:
executing a predetermined process corresponding to the first virtual terminal in response to a third command transmitted from the second virtual terminal to the first virtual terminal.

12. A non-transitory computer-readable storage medium storing therein a communication program for causing a computer to execute a process comprising:
transmitting a first command to a first device and a second device;
displaying a first icon of the first device having an image of a first virtual terminal and a second icon of the second device having an image of a second virtual terminal, on the basis of first profile information having identification information and address of the first virtual terminal of the first device and second profile information having identification information and address of the second virtual terminal of the second device, the first profile information and the second profile information being responded in response to the first command; and
transmitting, to the first device, a second command of setting the address of the second virtual terminal to the first virtual terminal of the first device and transmitting, to the second device, a third command of setting the address of the first virtual terminal to the second virtual terminal of the second device, in response to an input operation of interconnecting the image of the first virtual terminal of the first icon and the image of the second virtual terminal of the second icon.

13. The non-transitory computer-readable storage medium storing therein the communication program according to claim 12, wherein
the first profile information includes image information of the first device and the first virtual terminal,
the second profile information includes image information of the second device and the second virtual terminal, and
the first icon and the second icon are displayed on the basis of the image information.
